# EUROPÄISCHE PATENTSCHRIFT

(11) **EP 0 366 050 B1**
(45) Veröffentlichungstag und Bekanntmachung des Hinweises auf die Patenterteilung: **16.06.1993**
(21) Anmeldenummer: 89119659.4
(22) Anmeldetag: 24.10.1989
(51) Int. Cl.: B23Q 5/26

(54) **Werkzeugmaschine mit Hoch- und Niederdruckhydrauliknetz**
Machine tool with a high and a low pressure hydraulic circuit
Machine-outil munie d'un réseau hydraulique à pression élevée et d'un réseau à pression basse

(30) Priorität: 27.10.1988 DE 3836601
(43) Veröffentlichungstag der Anmeldung: 02.05.1990
(73) Patentinhaber: INDEX-WERKE GMBH & CO. KG HAHN & TESSKY, D-73726 Esslingen (DE)
(72) Erfinder: Link, Helmut Friedrich, D-7307 Aichwald 1 (DE)
(74) Vertreter: Hoeger, Stellrecht & Partner

(56) Entgegenhaltungen:
- NL-A- 243 893
- US-A- 2 356 366
- US-A- 2 455 271
- OELHYDRAULIK UND PNEUMATIK, Heft 3, 1957, Seiten 123-127, Wiesbaden, DE; W. DIETER: "Hydraulische Arbeitskreise mit wechselndem Druckölbedarf (I)"
- A. DÜRR et al.: "Hydraulik in Werkzeugmaschinen", 1968, Carl Hanser Verlag, München, DE

## Beschreibung

Die Erfindung betrifft eine Werkzeugmaschine mit mindestens einem hydraulischen, in einem Arbeits- oder Eilgang betreibbaren Antrieb, welcher über eine Versorgungsleitung mit einem von einer Hochdruckpumpe gespeisten Hochdrucknetz verbunden ist.

Insbesondere bei Werkzeugmaschinen mit einer Vielzahl von hydraulischen Antrieben, wie z.B. Mehrspindeldrehautomaten, Schalttellermaschinen und Transfermaschinen, die insbesondere eine Vielzahl elektrohydraulischer Schlittenantriebe aufweisen, ist überlicherweise ein zentrales Hochdruckhydrauliknetz vorgesehen, von welchem ausgehend sämtliche Antriebe versorgt werden. Dieses Konzept hat den Vorteil, daß nur eine einzige Pumpe erforderlich ist, um das Hochdrucknetz zu speisen.

Dieses Konzept hat jedoch den großen Nachteil, daß alle Antriebe sowohl im Arbeitsgang bei einem kleinen Strom von Hydraulikmedium als auch im Eilgang bei einem großen Strom von Hydraulikmedium mit dem Hochdruck betrieben werden, obwohl lediglich im Arbeitsgang Hochdruck nötig wäre, um die erforderlichen großen Vorschubkräfte zu erzeugen, während im Eilgang lediglich Reibungs- und Strömungskräfte zu überwinden sind, so daß ein wesentlich geringerer Druck ausreichend wäre.

Der Erfindung liegt daher die Aufgabe zugrunde, eine Werkzeugmaschine der gattungsgemäßen Art derart zu verbessern, daß ein Betreiben der Antriebe im Arbeitsgang mit Hochdruck und im Eilgang im wesentlichen mit Niederdruck möglich ist.

Diese Aufgabe wird bei einer Werkzeugmaschine der eingangs beschriebenen Art erfindungsgemäß dadurch gelöst, daß zum Betreiben des Antriebs im Eilgang ein von einer Niederdruckpumpe gespeistes Niederdrucknetz vorgesehen ist, daß zwischen dem Hochdrucknetz und der Versorgungsleitung ein Strömungsbegrenzungsglied angeordnet ist, welches im Eilgang durch Begrenzung des Stroms eines unter Hochdruck stehenden Hydraulikmediums in der Versorgungsleitung einen Druckabfall herbei führt und im Arbeitsgang den Hochdruck im wesentlichen aufrecht erhält, und daß das Niederdrucknetz über ein Rückschlagventil mit der Versorgungsleitung verbunden ist, wobei das Rückschlagventil aufgrund des Druckabfalls beim Eilgang geöffnet und im Arbeitsgang geschlossen ist.

Der Vorteil der erfindungsgemäßen Lösung ist darin zu sehen, daß mit dieser im Eilgang im wesentlichen nur mit Niederdruck gearbeitet wird, so daß eine erhebliche Energieersparnis die Folge ist und außerdem die insgesamt zu installierende Leistung in einer derartigen Werkzeugmaschine wesentlich geringer sein kann, ganz zu schweigen von der ebenfalls wesentlich geringeren Erwärmung im Hydrauliksystem, so daß auch Kühlaggregate im Hydrauliksystem entweder entfallen oder wesentlich kleiner dimensioniert werden können. Ein weiterer Vorteil ist außerdem, daß das gesamte Hochdrucknetz mit kleinen Querschnitten ausgeführt werden kann und daß lediglich das Niederdrucknetz für große Ölmengen dimensioniert sein muß.

Schließlich ist noch ein erheblicher Vorteil der erfindungsgemäßen Lösung im Hinblick auf die Bearbeitungsgenauigkeit der Werkzeugmaschinen darin zu sehen, daß im Hochdrucknetz nur kleine Ölströme zu den einzelnen Antrieben fließen, so daß es zu keinen nennenswerten Druckstößen beim Zu- und Abschalten der einzelnen Antriebe kommt, im Gegensatz zu dem bekannten Konzept, bei welchem dann, wenn einer der Antriebe im Eilgang verfahren wird,die im Arbeitseinsatz befindlichen Antriebe, wie beispielsweise die von im Schnitt befindlichen Werkzeugen, negativ durch den Druckabfall beeinträchtigt werden.

Darüber hinaus stellt auch die erfindungsgemäße Lösung sicher, daß das Anfahren der Antriebe aus dem Stillstand immer mit Hochdruck erfolgt, so daß die Haftreibung leichter überwunden wird.

Aus dem Stand der Technik ist es zwar bekannt, eine Hochdruckpumpe und eine Niederdruckpumpe zur Speisung der Versorgungsleitung parallel zu schalten, wobei zwischen der Niederdruckpumpe und der Versorgungsleitung ein Rückschlagventil vorgesehen ist und außerdem die Niederdruckpumpe über ein durch den Druck in der Versorgungsleitung gesteuertes Wegeventil auf freien Umlauf geschaltet ist. Diese Lösung hat jedoch den Nachteil, daß die Hochdruckpumpe auch im Eilgang betrieb stets mit voller Leistung fördert und daß lediglich dann, wenn der Druck aufgrund der begrenzten Förderleistung der Hochdruckpumpe in der Versorgungsleitung zusammenbricht,die Niederdruckpumpe zum Einsatz kommt. Damit benötigt man bei diesem System für jeden Antrieb eine Hochdruck- und eine Niederdruckpumpe, da dann, wenn der Antrieb im Eilgang betrieben wird, die Hochdruckpumpe keinen Hochdruck mehr erzeugt, mit welchem ein anderer Antrieb betrieben werden könnte.

Das Strömungsbegrenzungsglied könnte im einfachsten Fall eine einfache Drossel sein. Diese hätte jedoch den Nachteil, daß sie sowohl im Arbeitsgang als auch im Eilgang wirksam wäre. Aus diesem ist es vorteilhaft, wenn das Strömungsbegrenzungsglied bei Überschreiten eines vorgebbaren Maximalstroms von Hydraulikmedium wirksam ist, welcher durch einen maximal möglichen Verbrauch im Arbeitsgang bestimmt ist.

Eine Ansteuerung des Strömungsbegrenzungsglieds bei Überschreiten dieses Maximalstroms ist besonders einfach dann möglich, wenn das Strömungsbegrenzungsglied druckgesteuert ist.

Um ein zur Steuerung des Strömungsbegrenzungsglieds erforderliches Druckgefälle zu erzeugen, welches von dem dieses durchsetzenden Strom von Hydraulikmedium abhängig ist, ist vorgesehen, daß das Strömungsbegrenzungsglied durch eine an einer Meßblende entstehende Druckdifferenz gesteuert ist.

Die Meßblende kann grundsätzlich an beliebigen Stellen zwischen dem Hochdrucknetz und dem Antrieb vorgesehen sein, besonders zweckmäßig ist es jedoch, wenn die Meßblende stromabwärts des Strömungsbegrenzungsglieds angeordnet ist.

Im Rahmen der bislang beschriebenen Ausführungsformen wurde lediglich davon ausgegangen, daß das Niederdrucknetz über das Rückschlagventil mit der Versorgungsleitung verbunden ist, wobei jedoch keine Aussage darüber gemacht wurde, wie die Verbindung mit der Versorgungsleitung unter Berücksichtigung der Tatsache, daß eine Meßblende vorhanden ist, erfolgen soll. Bei einer bevorzugten ersten Variante ist vorgesehen, daß das Rückschlagventil mit einer zwischen dem Strömungsbegrenzungsglied und der Meßblende liegenden Zwischenleitung verbunden ist, was zur Folge hat, daß auch bei geöffnetem Rückschlagventil ein Teil des unter Niederdruck stehenden Hydraulikmediums durch die Meßblende strömt und den an diesen auftretenden Druckabfall aufrecht erhält.

Bei dieser Variante ist zweckmäßigerweise das Strömungsbegrenzungsglied ein druckgesteuertes Abschaltventil, welches bei Überschreiten eines Schaltwertes schließt, so daß dann, wenn an der Meßblende ein Druckgefälle entsteht, welches den Schaltwert übersteigt, das Strömungsbegrenzungsglied den Strom von Hydraulikmedium aus dem Hochdrucknetz in die Versorgungsleitung unterbindet.

Um insbesondere einen großen Strom von unter Niederdruck stehendem Hydraulikmedium beim Eilgang zu den Antrieben fließen zu lassen, ist vorgesehen, daß der Meßblende bei der vorstehend beschriebenen Variante ein Rückschlagventil parallelgeschaltet ist, welches bei einem Öffnungsdruck öffnet, der größer ist als der Schaltwert des Abschaltventils. Dadurch wird erreicht, daß dann, wenn das Druckgefälle an der Meßblende größer wird als für das Aufrechterhalten des abgeschalteten Zustands des Abschaltventils notwendig ist, das der Meßblende parallelgeschaltete Rückschlagventil öffnet und somit einen By-pass zur Meßblende möglich macht, so daß nicht das ganze unter Niederdruck stehende Hydraulikmedium durch die Meßblende hindurchfließen muß und insgesamt der Strömungswiderstand der Anordnung geringer wird, und folglich im Eilgang große Ströme von Hydraulikmedium fließen können.

Bei einer zweiten Variante ist vorgesehen, daß das Rückschlagventil mit der stromabwärts auf die Meßblende folgenden Versorgungsleitung verbunden ist, so daß im Eilgangbetrieb das unter Niederdruck stehende Hydraulikmedium nicht die Meßblende durchfließt.

Bei dieser Variante ist es zweckmäßigerweise vorgesehen, daß das Strömungsbegrenzungsglied ein druckgesteuertes Drosselventil ist, welches den Strom von unter Hochdruck stehendem Hydraulikmedium auf den vorgebbaren Maximalstrom begrenzt, wobei der Maximalstrom vorteilhafterweise so wählbar ist, daß er über dem im Arbeitsgang der Antriebe erforderlichen Strom liegt.

Bei den bislang beschriebenen Ausführungsbeispielen wurde nicht darauf eingegangen, wie das Niederdrucknetz im einzelnen ausgebildet sein sollte. So ist es beispielsweise vorteilhaft, wenn das Niederdrucknetz einen Niederdruckspeicher umfaßt, da dann eine kleine Pumpleistung ausreichend ist und ein Spitzenverbrauch über den Niederdruckspeicher abgefangen werden kann.

Bei einer bevorzugten Ausführungsform ist vorgesehen, daß zwischen dem Niederdrucknetz und der Niederdruckpumpe ein Rückschlagventil vorgesehen ist, so daß die Möglichkeit besteht, bei Erreichen des Niederdrucks im Niederdrucknetz die Niederdruckpumpe auf freien Umlauf zu schalten.

Eine zweckmäßige Möglichkeit, dies zu erreichen ist dann gegeben, wenn von einer Verbindung zwischen dem Rückschlagventil und der Niederdruckpumpe eine Tankleitung mit einem vom Druck im Niederdrucknetz gesteuerten Niederdruckspeicherladeventil abzweigt, welches stets dann, wenn der Niederdruck im Niederdrucknetz unter einem Sollwert liegt, schließt, so daß die Niederdruckpumpe über das Rückschlagventil unter Niederdruck stehendes Hydraulikmedium in das Niederdrucknetz einspeist, während bei Erreichen des Niederdrucks und vorzugsweise gefülltem Niederdruckspeicher das Speicherladeventil öffnet und die Niederdruckpumpe auf freien Umlauf schaltet, wobei dann das Rückschlagventil ein Rückströmen aus dem Niederdrucknetz verhindert.

Auch hinsichtlich des Hochdrucknetzes wurden bei den bisher beschriebenen Ausführungsbeispielen keine näheren Ausführungen gemacht. So ist es ebenfalls beim Hochdrucknetz zweckmäßig, wenn dieses einen Hochdruckspeicher umfaßt, so daß die Pumpleistung geringer gewählt werden kann und dieser Hochdruckspeicher Verbrauchsspitzen abfängt.

Desgleichen ist es ebenfalls vorteilhaft, wenn zwischen der Hochdruckpumpe und dem Hochdrucknetz ein Rückschlagventil vorgesehen ist, so daß ebenfalls die Hochdruckpumpe bei Erreichen des Sollwertes für den Hochdruck im Hochdrucknetz auf freien Umlauf schaltbar ist.

Hierzu ist es ebenfalls besonders zweckmäßig, wenn zwischen der Hochdruckpumpe und dem Rückschlagventil eine Rückleitung mit einem vom Druck im Hochdrucknetz gesteuerten Hochdruckspeicherladeventil abzweigt, welches bei Erreichen des Sollwertes für den Hochdruck im Hochdrucknetz öffnet und ein Abfließen des von der Hochdruckpumpe geförderten Hydraulikmediums über die Rückleitung erlaubt.

Die Rückleitung kann in einem einfachen Ausführungsbeispiel so ausgebildet sein, daß sie direkt in den Tank für Hydraulikmedium führt, in gleicher Weise wie die vorstehend beschriebene Tankleitung. Eine optimale Ausnützung der Leistung der Hochdruckpumpe ist jedoch dann gegeben, wenn die Rückleitung in die Tankleitung zwischen dem Rückschlagventil und dem Niederdruckspeicherladeventil einmündet, so daß das unter Hochdruck stehende Hydraulikmedium auch zur Versorgung des Niederdrucknetzes verwendet werden kann und insbesondere bei einem schnellen Abfall des Drucks im Niederdrucknetz die Förderleistung der Niederdruckpumpe unterstützt.

Weitere Merkmale und Vorteile der erfindungsgemäßen Lösung sind Gegenstand der nachfolgenden Beschreibung sowie der zeichnerischen Darstellung einiger Ausführungsbeispiele. In der Zeichnung zeigen:
- Fig. 1: eine Gesamtansicht einer erfindungsgemäßen Werkzeugmaschine;
- Fig. 2: eine schematische Darstellung einer ersten Variante der erfindungsgemäßen Lösung und
- Fig. 3: eine schematische Darstellung einer zweiten Variante der erfindungsgemäßen Lösung.

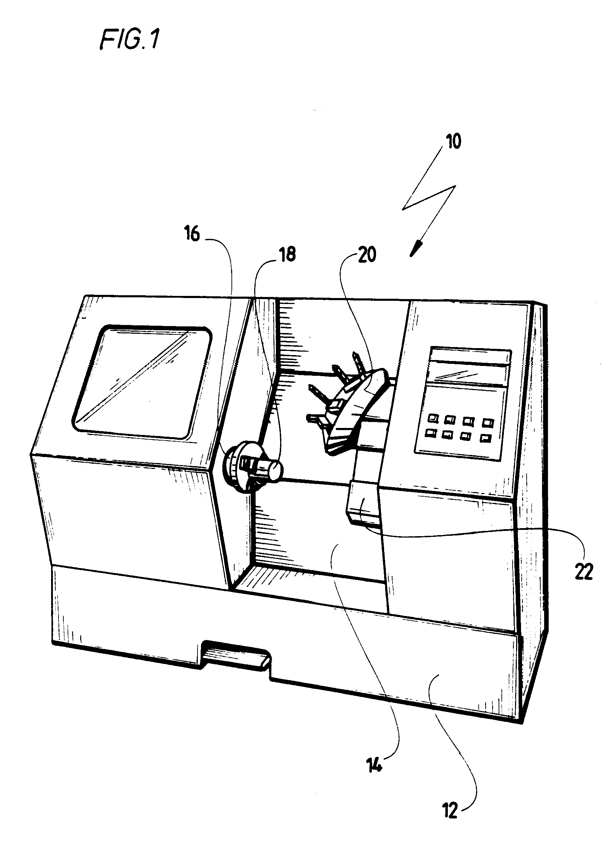

Ein in Fig. 1 als Ganzes mit 10 bezeichnetes Ausführungsbeispiel einer Werkzeugmaschine in Form einer Drehmaschine umfaßt ein Gestell 12 mit einem Arbeitsraum 14, in welchen in Fig. 1 von links eine Arbeitspindel 16 hereinragt, in der ein Werkstück 18 zum Bearbeiten einspannbar ist. Die Bearbeitung des Werkstücks 18 erfolgt mittels eines im Arbeitsraum 14 angeordneten Werkzeugträgers 20, welcher auf einem Kreuzschlitten 22 in Richtung zweier Achsen verschiebbar ist.

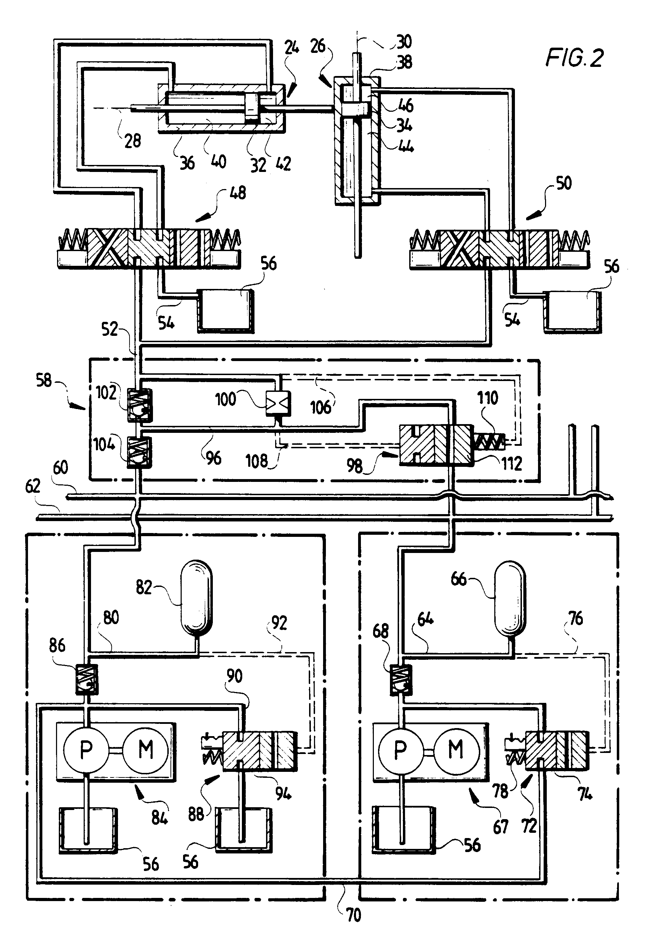

Der Kreuzschlitten 22 ist, wie in Fig. 2 dargestellt, durch einen Antrieb in Form eines ersten elektrohydraulischen Schlittenantriebs 24 und eines zweiten elektrohydraulischen Schlittenantriebs 26 in Richtung einer ersten Achse 28 bzw. einer zweiten Achse 30 verfahrbar.

Jeder der Schlittenantriebe 24, 26 umfaßt einen in Richtung der jeweiligen Achse 28 bzw. 30 verfahrbaren Kolben 32 bzw. 34, welcher jeweils ein Zylindergehäuse 36 bzw. 38 in zwei Zylinderräume 40 und 42 bzw. 44 und 46 unterteilt.

Die Steuerung der Schlittenantriebe 24 bzw. 26 erfolgt über ein erstes bzw. ein zweites Steuerventil 48 bzw. 50, welche je nach Ansteuerung durch eine Maschinensteuerung entweder einen der Zylinderräume 40 oder 42 bzw. 44 oder 46 mit einer Versorgungsleitung 52 für Hydraulikmedium verbinden und den jeweils anderen Zylinderraum 42 oder 40 bzw. 46 oder 44 auf eine Tankrückleitung 54 schalten, welche das Hydraulikmedium zu dem für dieses vorgesehenen Tank 56 zurückführt.

Über eine als Ganzes mit 58 bezeichnete Netzumschaltung besteht die Möglichkeit, die Versorgungsleitung 52 entweder mit einer Niederdrucksammelleitung 60 oder mit einer Hochdrucksammelleitung 62 zu verbinden.

Die Hochdrucksammelleitung 62 ist dabei Teil eines Hochdrucknetzes, welches eine von der Hochdrucksammelleitung abzweigende Hochdruckspeiseleitung 64 aufweist, an welcher ein Hochdruckspeicher 66 hängt.

Eine als Ganzes mit 67 bezeichnete Hochdruckpumpe fördert aus dem bereits erwähnten Tank 56 Hydraulikmedium über ein Rückschlagventil 68 in die Hochdruckspeiseleitung 64, sofern eine zwischen einem Ausgang der Hochdruckpumpe 67 und dem Rückschlagventil 68 abzweigende Rückleitung 70 durch ein in dieser angeordnetes Hochdruckspeicherladeventil 72 blockiert ist. Das Hochdruckspeicherladeventil 72 ist als Abschaltventil ausgelegt und umfaßt einen Steuerschieber 74, welcher einerseits über eine von der Hochdruckspeiseleitung 64 abzweigende Steuerleitung 76 mit dem in diese Hochdruckspeiseleitung 64 herrschenden Druck beaufschlagt ist und andererseits durch eine Feder 78 in Richtung seiner Schließstellung.
Übersteigt nun der Druck in der Hochdruckspeiseleitung 74 einen durch die Feder 78 einstellbaren Sollwert, so wird der über die Steuerleitung 76 durch diesen Druck beaufschlagte Steuerschieber 74 in Richtung seiner öffnenden Stellung verschoben und blockiert die Rückleitung 70 nicht mehr, so daß Hydraulikmedium anstatt über das Rückschlagventil 68 in die Hochdruckspeiseleitung 64 nun über die Rückleitung 70 abfließt. Fällt dagegen der Druck in der Hochdruckspeiseleitung 64 wieder unter den Sollwert ab, so schließt der Steuerschieber 74 die Rückleitung 70 wieder und die Hochdruckpumpe 67 fördert über das Rückschlagventil 68 wiederum Hydraulikmedium in die Hochdruckspeiseleitung 64.

Das Niederdrucknetz umfaßt eine von der Niederdrucksammelleitung 60 abzweigende Niederdruckspeiseleitung 80 und einen an der Niederdruckspeiseleitung 80 hängenden Niederdruckspeicher 82. Eine Niederdruckpumpe 84 fördert ebenfalls von dem Tank 56 Hydraulikmedium über ein Rückschlagventil 86 in die Niederdruckspeiseleitung 80, sofern ein Niederdruckspeicherladeventil 88 eine zwischen einem Ausgang der Niederdruckpumpe 84 und dem Rückschlagventil 86 abzweigende Tankleitung 90 blockiert. Auch das Niederdruckspeicherladeventil 88 ist über eine Steuerleitung 92 mit der Niederdruckspeiseleitung 80 verbunden, so daß ein Steuerschieber 94 des Niederdruckspeicherladeventils 88 in gleicher Weise wie der Steuerschieber 74 des Hochdruckspeicherladeventils 72 funktioniert und hinsichtlich der Funktionsbeschreibung auf die Ausführungen zum Hochdruckspeicherladeventil 72 verwiesen werden kann. Die Tankleitung 90 mündet dabei unmittelbar in den Tank 56 für Hydraulikmedium.

Darüber hinaus mündet die Rückleitung 70, in welcher das Hochdruckspeicherladeventil 72 angeordnet ist, ebenfalls in die Tankleitung 90 zwischen dem Rückschlagventil 86 und dem Niederdruckspeicherladeventil 88. Dies ermöglicht, zusätzlich zu dem von der Niederdruckpumpe 84 geförderten Hydraulikmedium auch noch das überschüssige, von der Hochdruckpumpe 67 geförderte Hydraulikmedium zur Speisung der Niederdruckspeiseleitung 80 zu verwenden.

Die erfindungsgemäße und bislang nicht beschriebene Netzumschaltung 58 umfaßt eine Zwischenleitung 96, welche über ein Differenzdruckventil 98 mit der Hochdrucksammelleitung 62 verbindbar ist. Ferner ist zwischen der Zwischenleitung 96 und der Versorgungsleitung 52 eine Meßblende 100 vorgesehen und parallel zu dieser, d.h. also ebenfalls zwischen der Zwischenleitung 96 und der Versorgungsleitung 52, ein bei Überschreiten eines vorgegebenen Öffnungsdrucks öffnendes Rückschlagventil 102. Dieses Rückschlagventil 102 öffnet dann, wenn die Differenz zwischen dem Druck in der Zwischenleitung 96 und der Versorgungsleitung 52 den Öffnungsdruck überschreitet, so daß dann ein By-pass zur Meßblende 100 besteht.

Die Niederdrucksammelleitung 60 ist ihrerseits über ein Rückschlagventil 104 mit der Zwischenleitung 96 verbunden, welches stets dann geschlossen ist, wenn der Druck in der Zwischenleitung 96 größer als der in der Niederdrucksammelleitung 60 ist.

Das Differenzdruckventil 98 mißt über eine erste Steuerleitung 106 den Druck in der Versorgungsleitung 52 und über eine zweite Steuerleitung 108 den Druck in der Zwischenleitung 96. Der Druck in der ersten Steuerleitung 106 beaufschlagt dabei, zusätzlich unterstützt durch eine Feder 110, einen Steuerschieber 112 des Differenzdruckventils 98 in Richtung seiner offenen, also die Zwischenleitung 96 mit der Hochdrucksammelleitung 62 verbindenden Stellung, während der Druck in der zweiten Steuerleitung 108 den Steuerschieber 112 in Richtung seiner schließenden Stellung zu verschieben versucht.

Die erfindungsgemäße Netzumschaltung 58 funktioniert nun folgendermaßen:
Geht man davon aus, daß der Kreuzschlitten 22 stets Arbeitsbewegungen durchführt, die bekanntlich sehr langsam, aber mit unter Hochdruck stehendem Hydraulikmedium durchzuführen sind, so läßt sich ein maximaler Verbrauch von unter Hochdruck stehendem Hydraulikmedium ermitteln, welcher beim Verfahren des Kreuzschlittens 22 längs beider Achsen auftritt. Ein typischer Maximalstrom von unter Hochdruck stehendem Hydraulikmedium liegt bei ungefähr 2 Liter pro Minute.

Um sicherzustellen, daß während der gesamten Arbeitsbewegungen die Versorgungsleitung 52 ausschließlich mit unter Hochdruck stehendem Hydraulikmedium versorgt wird, wird die Meßblende 100 so gewählt, daß das an dieser entstehende Druckgefälle auch beim Maximalstrom einen Schaltwert nicht überschreitet, welcher notwendig wäre, um den Steuerschieber 112 des Differenzdruckventils 98 von seiner offenen in seine geschlossene Stellung gegen die Kraft der Feder 110 umzuschalten.

In diesem Fall ist die Zwischenleitung 96 stets mit der Hochdrucksammelleitung 62 verbunden, so daß das Rückschlagventil 104 geschlossen bleibt und lediglich unter Hochdruck stehendes Hydraulikmedium von der Zwischenleitung 96 über die Meßblende 100 in die Versorgungsleitung 52 einströmt. Da der Druckabfall an der Meßblende 100 den Schaltwert nicht überschreitet, überwiegt die Kraft der Feder 110 zusammen mit der vom Druck in der Versorgungsleitung 52 hervorgerufenen Kraft auf den Steuerschieber 112 die vom Druck in der Zwischenleitung 96 ausgeübte Kraft, so daß der Steuerschieber 112 stets offen bleibt.

Führt jedoch einer der Schlittenantriebe 24 oder 26 oder führen beide Schlittenantriebe 24, 26 eine Eilbewegung durch, so liegt der Maximalstrom von Hydraulikmedium höher, er kann beispielsweise einen typischen Wert von 20 Liter pro Minute erreichen. In diesem Fall tritt nun an der Meßblende 100 ein Druckgefälle auf, welches den Schaltwert des Differenzdruckventils 98 überschreitet, so daß die vom Druck in der Zwischenleitung 96 auf den Steuerschieber 112 wirkende Kraft diesen in Richtung seiner geschlossenen und somit die Zwischenleitung 96 von der Hochdrucksammelleitung 62 abkoppelnden Stellung verschiebt. Dies hat wiederum zur Folge, daß das Rückschlagventil 104 öffnet und nun Hydraulikmedium von der Niederdrucksammelleitung 60 über das Rückschlagventil 104 in die Zwischenleitung einströmt. Dieses Hydraulikmedium strömt nun zunächst ebenfalls über die Meßblende 100, um das an dieser auftretende Druckgefälle über dem Schaltwert des Differenzdruckventils 98 zu halten, so daß dieses in seiner geschlossenen Stellung verbleibt.

Bei einem sehr großen Verbrauch von Hydraulikmedium bei den Eilbewegungen stellt jedoch die Meßblende 100 einen unerwünschten Strömungswiderstand dar. Aus diesem Grund ist der Öffnungdruck des Rückschlagventils 102 so gewählt, daß dieses dann öffnet, wenn das Druckgefälle an der Meßblende 100 den Schaltwert für das Differenzdruckventil 98 überschreitet.
Beispielsweise wird der Öffnungsdruck des Rückschlagventils 102 doppelt so groß wie der Schaltwert des Differenzdruckventils 98 gewählt. Überschreitet nun das Druckgefälle der Meßblende 100 den Öffnungsdruck des Rückschlagventils 102, so öffnet dieses ebenfalls und es entsteht ein By-pass zur Meßblende 100, so daß der Strömungswiderstand der Kombination der Meßblende 100 mit dem parallelgeschalteten Rückschlagventil 102 geringer wird und die Geschwindigkeit der Eilbewegung nicht limitiert.

Sobald die Eilbewegung beendet ist, bricht das Druckgefälle an der Meßblende 100 wieder soweit zusammen, daß es den Schaltwert des Differenzdruckventils 98 unterschreitet, so daß dieses wiederum öffnet und durch Ansteigen des Drucks in der Zwischenleitung 96 auch wieder das Rückschlagventil 104 schließt.

Die Netzumschaltung 58 bewirkt somit, daß in dem Moment, in dem die Schlittenantriebe 24, 26 Eilbewegungen durchführen, kein Hydraulikmedium aus der Hochdrucksammelleitung 62 mehr entnommen wird, sondern lediglich Hydraulikmedium aus der Niederdrucksammelleitung 60, da der niedrigere Druck des Hydraulikmediums für die Eilbewegungen vollkommen ausreicht, während dann, wenn Arbeitsbewegungen mit großen Gegenkräften durchgeführt werden sollen, die Antriebe 24, 26 lediglich mit unter Hochdruck stehendem Hydraulikmedium aus der Hochdrucksammelleitung 62 arbeiten.

Typische Werte des Drucks in der Hochdrucksammelleitung sind ungefähr 100 Bar, während ein typischer Wert des Drucks in der Niederdrucksammelleitung ungefähr 30 Bar beträgt. Der Schaltwert des Differenzdruckventils 98 kann beispielsweise bei 0,5 Bar liegen, während der Öffnungsdruck des Rückschlagventils 102 dann bei ungefähr 1 Bar liegen sollte.

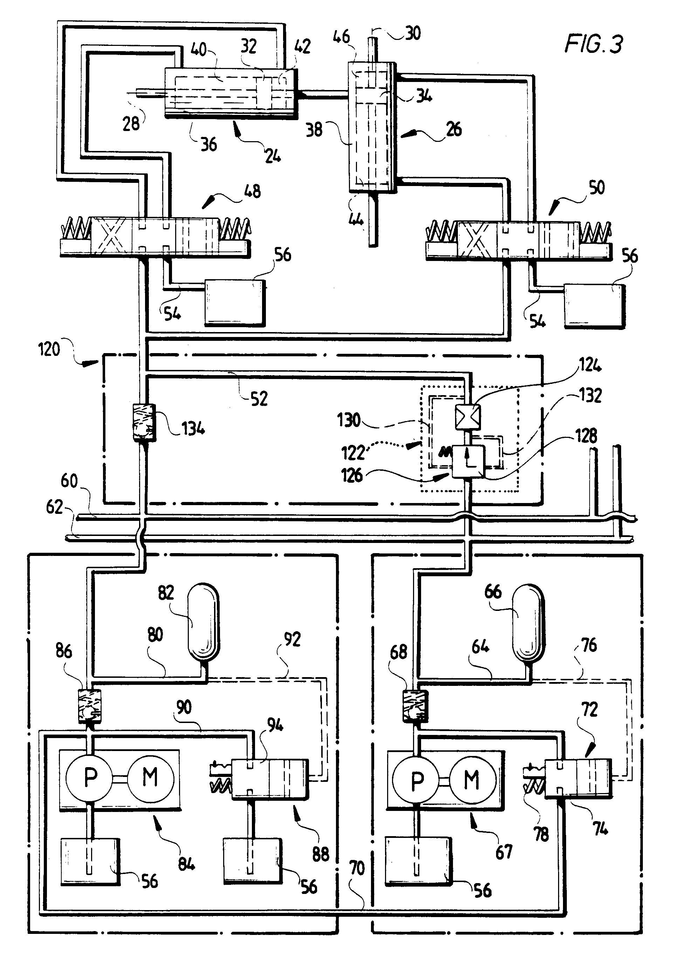

Ein zweites Ausführungsbeispiel der erfindungsgemäßen Lösung, dargestellt in Fig. 3, ist, insoweit als dieselben Teile Verwendung finden, mit denselben Bezugszeichen versehen. Bezüglich der Beschreibung wird daher insoweit auf die Ausführungen zum ersten Ausführungsbeispiel, dargestellt in Fig. 1 und 2, Bezug genommen.

Im Gegensatz zum ersten Ausführungsbeispiel ist die Netzumschaltung 12O anders ausgebildet. Diese umfaßt ein zwischen der Hochdrucksammelleitung 62 und der Versorgungsleitung 52 liegendes, als Ganzes mit 122 bezeichnetes Strombegrenzungsventil, welches eine Meßblende 124 sowie ein dieser vorgeschaltetes als Drosselventil wirkendes Differenzdruckventil 126 aufweist, dessen Steuerkolben 128 über eine erste Steuerleitung 130 mit Hydraulikmedium unter dem Druck vor der Meßblende 124 und über eine zweite Steuerleitung 132 mit Hydraulikmedium unter dem Druck nach der Meßblende 124 in Schließ- bzw. Öffnungsrichtung beaufschlagt ist, so daß bei einem großen Druckabfall an der Meßblende, d. h. hoher Durchströmung, das Differenzdruckventil 126 drosselt, während es bei geringem Druckabfall an der Meßblende 124, d.h. geringer Druchströmung, öffnet. Mit diesem Strombegrenzungsventil 122 läßt sich somit ein Maximalstrom von Hydraulikmedium einstellen, der so gewählt wird, daß er zumindest dem Maximalverbrauch bei Arbeitsbewegungen beider Antriebe 24, 26 entspricht.

Neben dem Strombegrenzungsventil 122 umfaßt die Netzumschaltung 120 noch ein Rückschlagventil 134, welches zwischen der Niederdrucksammelleitung 60 und der Versorgungsleitung 52 liegt. Das Rückschlagventil 134 entspricht in seiner Funktion dem Rückschlagventil 104 der Netzumschaltung 58.

Das zweite Ausführungsbeispiel funktioniert nun so, daß dann, wenn die Schlittenantriebe 24, 26 Eilbewegungen durchführen, durch das Überschreiten des mit dem Strombegrenzungsventil 122 eingestellten Maximalstroms von Hydraulikmedium von der Hochdrucksammelleitung 62 zur Versorgungsleitung 52 ein Druckabfall in der Versorgungsleitung 52 eintritt. Sobald der Druck in der Versorgungsleitung 52 unter den Druck in der Niederdrucksammelleitung 60 abfällt, öffnet das Rückschlagventil 134, so daß nun unter Niederdruck stehendes Hydraulikmedium in die Versorgungsleitung 52 einströmen kann. Im Gegensatz zum ersten Ausführungsbeispiel wird jedoch die Zufuhr von unter Hochdruck stehendem Hydraulikmedium nicht unterbunden, sondern lediglich auf den am Strombegrenzungsventil 122 einstellbaren Maximalstrom begrenzt.

Nach Beendigung der Eilbewegung der Antriebe 24, 26 steigt der Druck in der Versorgungsleitung 52 wiederum über den Druck in der Niederdrucksammelleitung 60 an, so daß das Rückschlagventil 134 schließt und die Versorgungsleitung 52 bei den Arbeitsbewegungen der Antriebe 24, 26 wiederum mit unter Hochdruck stehendem Hydraulikmedium über das Strombegrenzungsventil 122 versorgt wird.

## Patentansprüche

1. Werkzeugmaschine mit mindestens einem hydraulischen, in einem Arbeits- oder Eilgang betreibbaren Antrieb (24, 26), welcher über eine Versorgungsleitung (52) mit einem von einer Hochdruckpumpe (67) gespeisten Hochdrucknetz (62, 64, 66) verbunden ist, dadurch gekennzeichnet, daß zum Betreiben des Antriebs (24, 26) im Eilgang ein von einer Niederdruckpumpe (84) gespeistes Niederdrucknetz (60, 80, 82) vorgesehen ist, daß zwischen dem Hochdrucknetz (62, 64, 66) und der Versorgungsleitung (52) ein Strömungsbegrenzungsglied (98; 126) angeordnet ist, welches im Eilgang durch Begrenzung des Stroms eines unter Hochdruck stehenden Hydraulikmediums in der Versorgungsleitung (52) einen Druckabfall herbeiführt und im Arbeitsgang den Hochdruck im wesentlichen aufrecht erhält,und daß das Niederdrucknetz (60, 80, 82) über ein Rückschlagventil (104; 134) mit der Versorgungsleitung (52) verbunden ist, wobei das Rückschlagventil (104; 134) aufgrund des Druckabfalls im Eilgang geöffnet und im Arbeitsgang geschlossen ist.

2. Werkzeugmaschine nach Anspruch 1 , dadurch gekennzeichnet, daß das Strömungsbegrenzungsglied (98; 126) beim Überschreiten eines vorgebbaren Maximalstroms von Hydraulikmedium wirksam ist.

3. Werkzeugmaschine nach Anspruch 1 oder 2, dadurch gekennzeichnet, daß das Strömungsbegrenzungsglied (98; 126) druckgesteuert ist.

4. Werkzeugmaschine nach Anspruch 3, dadurch gekennzeichnet, daß das Strömungsbegrenzungsglied (98; 126) durch eine an einer Meßblende (100; 124) entstehende Druckdifferenz gesteuert ist.

5. Werkzeugmaschine nach Anspruch 4, dadurch gekennzeichnet, daß die Meßblende (100; 124) stromabwärts des Strömungsbegrenzungsglieds (98; 126) angeordnet ist.

6. Werkzeugmaschine nach Anspruch 5, dadurch gekennzeichnet, daß das Rückschlagventil (104) mit einer zwischen dem Strömungsbegrenzungsglied (98) und der Meßblende (100) liegenden Zwischenleitung (96) verbunden ist.

7. Werkzeugmaschine nach einem der Ansprüche 3 bis 6, dadurch gekennzeichnet, daß das Strömungsbegrenzungsglied ein druckgesteuertes Abschaltventil (98) ist, welches schließt , wenn die Druckdifferenz einen Schaltwert überschreitet.

8. Werkzeugmaschine nach Anspruch 7, dadurch gekennzeichnet, daß der Meßblende (100) ein Rückschlagventil (102) parallelgeschaltet ist, welches bei einem Öffnungsdruck öffnet, der größer ist als der Schaltwert des Abschaltventils (98).

9. Werkzeugmaschine nach Anspruch 4 oder 5, dadurch gekennzeichnet, daß das Rückschlagventil (134) mit der Versorgungsleitung (52) verbunden ist.

10. Werkzeugmaschine nach Anspruch 9, dadurch gekennzeichnet, daß das Strömungsbegrenzungsglied ein druckgesteuertes Drosselventil (126) ist.

11. Werkzeugmaschine nach einem der voranstehenden Ansprüche, dadurch gekennzeichnet, daß das Niederdrucknetz (60, 80) einen Niederdruckspeicher (82) umfaßt.

12. Werkzeugmaschine nach einem der voranstehenden Ansprüche, dadurch gekennzeichnet, daß zwischen dem Niederdrucknetz (60, 80, 82) und der Niederdruckpumpe (84) ein Rückschlagventil (86) vorgesehen ist.

13. Werkzeugmaschine nach Anspruch 12, dadurch gekennzeichnet, daß von einer Verbindung zwischen dem Rückschlagventil (86) und der Niederdruckpumpe (84) eine Tankleitung (90) mit einem vom Druck im Niederdrucknetz (60, 80, 82) gesteuerten Niederdruckspeicherladeventil (88) abzweigt.

14. Werkzeugmaschine nach einem der voranstehenden Ansprüche, dadurch gekennzeichnet, daß das Hochdrucknetz (62, 64) einen Hochdruckspeicher (66) umfaßt.

15. Werkzeugmaschine nach einem der voranstehenden Ansprüche, dadurch gekennzeichnet, daß zwischen der Hochdruckpumpe (67) und dem Hochdrucknetz (62, 64, 66) ein Rückschlagventil (68) vorgesehen ist.

16. Werkzeugmaschine nach Anspruch 15, dadurch gekennzeichnet, daß zwischen der Hochdruckpumpe (67) und dem Rückschlagventil (68) eine Rückleitung (70) mit einem vom Druck im Hochdrucknetz (62, 64, 66) gesteuerten Hochdruckspeicherladeventil (72) abzweigt.

17. Werkzeugmaschine nach Anspruch 16, dadurch gekennzeichnet, daß die Rückleitung (70) in die Tankleitung (90) zwischen dem Rückschlagventil (86) und dem Niederdruckspeicherladeventil (88) einmündet.

## Claims

1. Machine tool comprising at least one hydraulic drive (24, 26) for operation in a working motion or a rapid motion and connected via a supply line (52) to a high-pressure circuit (62, 64, 66) supplied by a high-pressure pump (67), characterized in that a low-pressure circuit (60, 80, 82) supplied by a low-pressure pump (84) is provided for operating the drive (24, 26) in the rapid motion, that a flow limiting means (98; 126) is arranged between the high-pressure circuit (62, 64, 66) and the supply line (52), said flow limiting means causing a drop in pressure in the supply line (52) during the rapid motion by limiting the flow of a hydraulic medium under high pressure and essentially maintaining the high pressure during the working motion, and that the low-pressure circuit (60, 80, 82) is connected via a check valve (104; 134) to the supply line (52), said check valve (104; 134) being open during the rapid motion on account of the drop in pressure and closed during the working motion.

2. Machine tool as defined in claim 1, characterized in that the flow limiting means (98; 126) is effective when a preselectable maximum flow of hydraulic medium is exceeded.

3. Machine tool as defined in claim 1 or 2, characterized in that the flow limiting means (98; 126) is pressure-controlled.

4. Machine tool as defined in claim 3, characterized in that the flow limiting means (98; 126) is controlled by a difference in pressure occurring at an orifice plate (100; 124).

5. Machine tool as defined in claim 4, characterized in that the orifice plate (100; 124) is arranged downstream of the flow limiting means (98; 126).

6. Machine tool as defined in claim 5, characterized in that the check valve (104) is connected with an intermediate line (96) located between the flow limiting means (98) and the orifice plate (100).

7. Machine tool as defined in any of claims 3 to 6, characterized in that the flow limiting means is a pressure-controlled shut-off valve (98) closing when the difference in pressure exceeds a switching value.

8. Machine tool as defined in claim 7, characterized in that a check valve (102) is connected in parallel to the orifice plate (100) and opens at an opening pressure greater than the switching value of the shut-off valve (98).

9. Machine tool as defined in claim 4 or 5, characterized in that the check valve (134) is connected to the supply line (52).

10. Machine tool as defined in claim 9, characterized in that the flow limiting means is a pressure-controlled throttle valve (126).

11. Machine tool as defined in any of the preceding claims, characterized in that the low-pressure circuit (60, 80) comprises a low-pressure reservoir (82).

12. Machine tool as defined in any of the preceding claims, characterized in that a check valve (86) is provided between the low-pressure circuit (60, 80, 82) and the low-pressure pump (84).

13. Machine tool as defined in claim 12, characterized in that a tank line (90) comprising a charging valve (88) for the low-pressure reservoir controlled by the pressure in the low-pressure circuit (60, 80, 82) branches off from a connection between the check valve (86) and the low-pressure pump (84).

14. Machine tool as defined in any of the preceding claims, characterized in that the high-pressure circuit (62, 64) comprises a high-pressure reservoir (66).

15. Machine tool as defined in any of the preceding claims, characterized in that a check valve (68) is provided between the high-pressure pump (67) and the high-pressure circuit (62, 64, 66).

16. Machine tool as defined in claim 15, characterized in that a return line (70) comprising a charging valve (72) for the high-pressure reservoir controlled by the pressure in the high-pressure circuit (62, 64, 66) branches off between the high-pressure pump (67) and the check valve (68).

17. Machine tool as defined in claim 16, characterized in that the return line (70) opens into the tank line (90) between the check valve (86) and the charging valve (88) for the low-pressure reservoir.

## Revendications

1. Machine-outil comprenant au moins utie commande hydraulique (24, 26) pouvant être mise en service en marche de travail ou en marche rapide et qui est raccordée par un conduit d'alimentation (52) à un réseau de haute pression (62, 64, 66) alimenté par une pompe (67) à haute pression, caractérisée en ce que pour mettre en service la commande (24, 26) en marche rapide, un réseau à basse pression (60, 80, 82) alimenté par une pompe à basse pression (84) est prévu, en ce qu'un organe (98 ; 126) de limitation de la circulation, qui est disposé entre le réseau de haute pression (62, 64, 66) et le conduit d'alimentation (52), provoque en marche rapide une chute de pression dans le conduit d'alimentation (52) par limitation du flux d'un fluide hydraulique qui est sous haute pression et maintient sensiblement intacte la haute pression en marche de travail et en ce que le réseau de basse pression (60, 80, 82) est relié par l'intermédiaire d'une soupape de retenue (104 ; 124) au conduit d'alimentation (52), la soupape de retenue (104 ; 124) étant ouverte en marche rapide par suite de la chute de pression et étant fermée en marche de travail.

2. Machine-outil selon la revendication 1, caractérisée en ce que l'organe de limitation de la circulation (98 ; 126) entre en action en cas de dépassement d'un flux maximal de fluide hydraulique qui peut être prescrit.

3. Machine-outil selon la revendication 1 ou 2, caractérisée en ce que l'organe de limitation de la circulation (98 ; 126) est commandé par pression.

4. Machine-outil selon la revendication 3, caractérisée en ce que l'organe de limitation de la circulation (98 ; 126) est commandé par une différence de pression se produisant de part et d'autre d'un orifice de mesure (100 ; 124).

5. Machine-outil selon la revendication 4, caractérisée en ce que l'orifice de mesure (100 ; 124) est disposé en aval de l'organe de limitation de la circulation (98 ; 126).

6. Machine-outil selon la revendication 5, caractérisée en ce que la soupape de retenue (104) est reliée à un conduit intermédiaire (96) situé entre l'organe de limitation de la circulation (98) et l'orifice de mesure (100).

7. Machine-outil selon l'une des revendications 3 à 6, caractérisée en ce que l'organe de limitation de la circulation est une soupape d'arrêt (98) qui est commandée par pression et qui se ferme lorsque la différence de pression dépasse une valeur de déclenchement.

8. Machine-outil selon la revendication 7, caractérisée en ce que l'orifice de mesure (100) est monté en parallèle avec une soupape de retenue (102) qui s'ouvre sous une pression d'ouverture qui est supérieure à celle de déclenchement de la soupape d'arrêt (98).

9. Machine-outil selon la revendication 4 ou 5, caractérisée en ce que la soupape de retenue (134) est reliée au conduit d'alimentation (52).

10. Machine-outil selon la revendication 9, caractérisée en ce que l'organe de limitation de la circulation est une soupape d'étranglement (126) commandée par pression.

11. Machine-outil selon l'une des revendications précédentes, caractérisée en ce que le réseau de basse pression (60 ; 80) comprend un réservoir (82) de basse pression.

12. Machine-outil selon l'une des revendications précédentes, caractérisée en ce qu'une soupape de retenue (86) est prévue entre le réseau de basse pression (60, 80, 82) et la pompe à basse pression (84).

13. Machine-outil selon la revendication 12, caractérisée en ce qu'un conduit de ravitaillement (90) équipé d'un distributeur (88) de chargement du réservoir de basse pression qui est commandé par la pression du réseau de basse pression (60, 80, 82), forme un embranchement sur un raccord entre la soupape de retenue (86) et la pompe à basse pression (84).

14. Machine-outil selon l'une des revendications précédentes, caractérisée en ce que le réseau de haute pression (62, 64) comprend un réservoir (66) de haute pression.

15. Machine-outil selon l'une quelconque des revendications précédentes, caractérisée en ce qu'une soupape de retenue (68) est prévue entre la pompe à haute pression (67) et le réseau de haute pression (62, 64, 66).

16. Machine-outil selon la revendication 15, caractérisée en ce qu'un conduit de reflux (70) équipé d'un distributeur (72) de chargement du réservoir de haute pression, qui est commandé par la pression régnant dans le réseau de haute pression (62, 64, 66), forme un embranchement entre la pompe à haute pression (67) et la soupape de retenue (68).

17. Machine-outil selon la revendication 16, caractérisée en ce que le conduit de reflux (70) débouche dans le conduit de ravitaillement (90) entre la soupape de retenue (86) et le distributeur (88) de chargement du réservoir de basse pression.
